# EUROPÄISCHE PATENTSCHRIFT

(11) **EP 1 319 871 B1**
(45) Veröffentlichungstag und Bekanntmachung des Hinweises auf die Patenterteilung: **27.05.2009**
(21) Anmeldenummer: 02027219.1
(22) Anmeldetag: 06.12.2002
(51) Int. Cl.: F16H 57/04

(54) **Schmiermittelzuführung für ein Planetengetriebe**
Supplying lubricant for a planetary transmission
Alimentation de lubrifiant pour une transmission planétaire

(30) Priorität: 14.12.2001 DE 10161374
(43) Veröffentlichungstag der Anmeldung: 18.06.2003
(73) Patentinhaber: GM Global Technology Operations, Inc., Detroit, MI 48265-3000 (US)
(72) Erfinder: Barnbeck, Armin, Dipl.-Ing., 65239 Hochheim (DE); Sahl, Holger, Dipl.-Ing., 65719 Hofheim (DE); Thiel, Andreas, Dipl.-Ing., 61194 Niddatal (DE)
(74) Vertreter: Strauss, Peter

(56) Entgegenhaltungen:
- DE-A1- 3 736 540
- DE-A1- 19 756 253
- DE-A1- 19 945 089
- GB-A- 2 026 102
- US-A- 5 261 289
- PATENT ABSTRACTS OF JAPAN Bd. 1997, Nr. 02, 28. Februar 1997 (1997-02-28) -& JP 08 270767 A (HONDA MOTOR CO LTD), 15. Oktober 1996 (1996-10-15)
- PATENT ABSTRACTS OF JAPAN Bd. 1996, Nr. 05, 31. Mai 1996 (1996-05-31) -& JP 08 014369 A (NIPPON SEIKO KK), 16. Januar 1996 (1996-01-16)

## Beschreibung

Die Erfindung betrifft eine Schmiermittelzuführung für ein Planetengetriebe gemäß dem Oberbegriff des Patentanspruches 1.

Bei Planetengetrieben, die häufig als Unteroder Übersetzungsgetriebe oder als Summierungsgetriebe mit koaxialem An- und Abtrieb verwendet werden, ist die ausreichende Versorgung der radial außen angeordneten Lagerungen der Planetenräder mit Schmiermittel problematisch.

Vor allem bei Leistungsverzweigungsgetrieben mit einem hydraulischen und einem mechanischen Zweig, bei denen der mechanische Zweig aus einem oder mehreren Planetengetrieben besteht, muss an den Lagerungen der Planetenräder für eine ausreichende Schmiermittelzufuhr gesorgt werden, da durch den hydraulischen Zweig des Leistungsverzweigungsgetriebes Schwingungen auf das Planetengetriebe übertragen werden. Diese Schwingungen können durch ausreichend zugeführtes Schmiermittel an die Lagerung der Planetenräder wirkungsvoll gedämpft werden. Sowohl das Geräuschverhalten des Getriebes als auch die Lebensdauer der Lagerung der Planetenräder wird dadurch verbessert.

Die bei Planetengetrieben übliche Zuführung von Schmierstoff zu den Planetenrädern durch eine am Planetenträger befestigte Stauscheibe, welche durch Rotation des Planetenträgers Schmiermittel sammelt, welches durch die Fliehkraft nach außen getrieben und in axiale Ölkanäle der Lagerbolzen der Planetenräder geleitet wird, wie dies zum Beispiel mit DE 197 56 253 A1 vorgeschlagen wird, ist bei Leistungsverzweigungsgetrieben nicht brauchbar, da die Drehzahlen des aus Planetengetrieben bestehenden mechanischen Teils bei bestimmten Betriebsbedingungen sehr niedrig sein können. Infolge der dann reduzierten Schmiermittelzuführung zu den Lagerungen der Planetenräder können Schäden am Getriebe auftreten.

Mit DE 199 45 089 A1 ist ein Planetengetriebe offenbart, mit einer in der Getriebehauptwelle verlaufenden .Schmiermittelzuführungsleitung mit radial zu den Rädern des Planetengetriebes gerichteten Schmierbohrungen und Mitteln zum Führen des Schmiermittels zu den Lagerstellen der beweglichen Teile des Planetengetriebes, insbesondere zu den Lagerungen der Planetenräder. Um den Schmiermittelbedarf an der Lagerung der Planetenräder zu sichern, werden zwei unabhängige Zuführungen vorgeschlagen. Die Mengenleistung beider Schmiermittelzuführungen ist jedoch abhängig von der Drehzahl des Planetengetriebes, da die Förderleistung des Schmiermittels von der zentralen Schmiermittelzuführleitung in der Getriebehauptwelle zu den Lagerungen der Planetenräder im Wesentlichen von der Fliehkraft beeinflusst ist.

Aus Patent Abstracts of Japan Bd. 1997, No. 2, 28. Februar 1997 und der JP 08 270767 A ist eine Schmiermittelzuführung für die Ritzelwelle eines Planetengetriebes bekannt, wie sie im Oberbegriff des Anspruchs 1 angegeben ist.

Der vorliegenden Erfindung liegt die Aufgabe zugrunde, eine Schmiermittelzuführung insbesondere an die Lagerung der Planetenräder eines Planetengetriebes zu schaffen, die weitgehend unabhängig vom Einfluss der Fliehkraft und damit von der Drehzahl des Getriebes arbeitet.

Erfindungsgemäß wird diese Aufgabe mit den Merkmalen des Anspruches 1 gelöst.

Die Merkmale der Unteransprüche stellen vorteilhafte Ausführungsformen der Erfindung dar.

Eine zentrale Getriebehauptwelle eines Planetengetriebes ist mit einer axial verlaufenden Schmiermittelzuführungsleitung versehen, in welche eine Schmiermittelpumpe ein Schmiermittel unter Druck fördert. Die Schmiermittelpumpe kann Teil des Planetengetriebes sein oder auch außerhalb dieses Getriebes angeordnet sein. Das Schmiermittel ist üblicherweise ein Schmieröl. Von der Schmiermittelzuführungsleitung gehen radial verlaufende Schmiermittelaustrittsbohrungen aus, durch welche das Schmiermittel unter dem Druck der Schmiermittelpumpe gezielt zu den Lagerstellen der beweglichen Teile des Planetengetriebes gelangt.

Ein spezieller Schmiermittel-Strom wird dabei zu einer in Richtung zur Getriebehauptwelle offenen am Planetenträger angeordneten Ringnut geleitet. Diese Ringnut ist an ihrem Grund mit radialen Durchgangsbohrungen versehen, an denen Rohrleitungen angesetzt sind. Diese Rohrleitungen führen zu Höhlungen in am Planetenträger befestigten Lagerbolzen, auf denen mittels spezieller Lagerungen Planetenräder gelagert sind. Die speziellen Lagerungen bestehen üblicherweise aus einem Nadelkranz. Von der Höhlung jedes Lagerbolzens gehen radiale Bohrungen aus, die zu den Lagerungen führen. Die Höhlungen in den Lagerbolzen sind bis auf die zu ihnen hinführenden Rohrleitungen und die zu den Lagerungen führenden Bohrungen verschlossen.

Sowohl unter dem Druck der Schmiermittelpumpe als auch durch die Wirkung der Fliehkraft bei umlaufendem Planetenträger wird so Schmiermittel aus der zentralen Schmiermittelzuführungsleitung in größerem Umfang gezielt zu den Lagerungen der Planetenräder gebracht. Dabei reicht der durch den Druck der Schmiermittelpumpe erzeugte Förderstrom bereits aus, eine für die erforderliche Dämpfung der Schwingungen der Planetenräder ausreichende Menge von Schmiermittel zu fördern.

Durch die erfindungsgemäße Schmiermittelzuführung ist somit gewährleistet, dass unabhängig von der Drehzahl des Planetengetriebes immer eine für die Schwingungsdämpfung der Planetenräder ausreichende Menge Schmiermittel an deren Lagerung zur Verfügung steht.

In besonders vorteilhafter Weise ist die mit dem Planetenträger verbundene Ringnut bzw. ein an ihr anliegendes Ringelement als separates Bauteil ausgebildet. Dieses separate Bauteil kann in weiterer vorteilhafter Weise mit den zu den Höhlungen der Lagerbolzen führenden Rohrleitungen und weiterhin auch mit den die Höhlung einseitig verschließenden Stopfen zu einem integralen Bauteil vereinigt sein. Ein solches integrales Bauteil vereinfacht die Montagearbeiten des Planetengetriebes erheblich.

Eine weitere Vereinfachung und Kostenreduzierung tritt ein, wenn dieses integrale Bauteil als Kunststoff-Formteil ausgeführt ist.

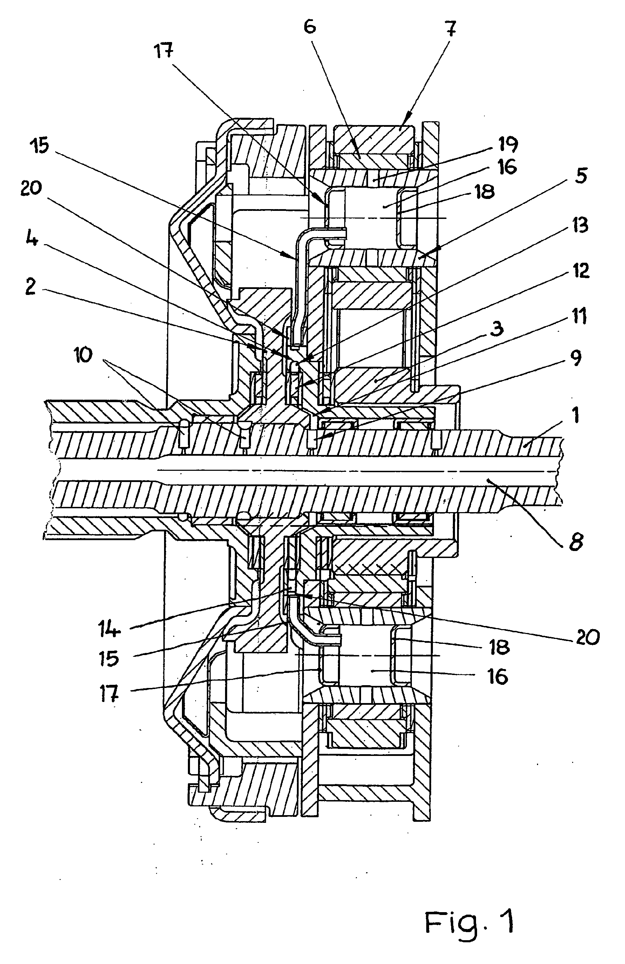

Ein Ausführungsbeispiel der Erfindung ist nachstehend anhand einer Zeichnung näher beschrieben. Es zeigen
- Fig. 1: einen Schnitt durch ein Planetenge- triebe mit einer erfindungsgemäßen Schmiermittel zuführung;

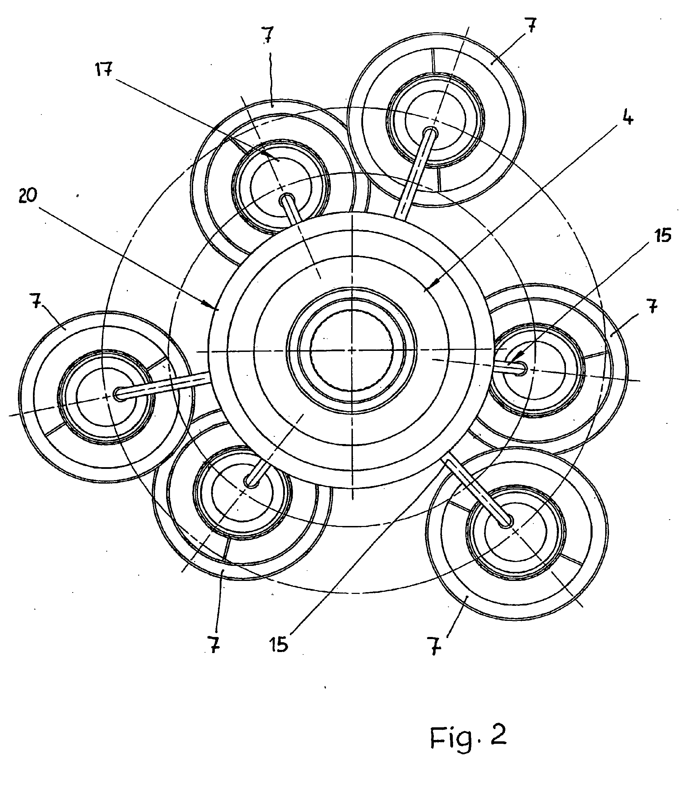

- Fig. 2: eine Ansicht auf den Planetenträger mit den Planetenrädern des Planeten- getriebes nach Figur 1
.

Eine zentrale Getriebehauptwelle 1 eines Planetengetriebes trägt ein äußeres Sonnenrad 2, ein inneres Zentralrad 3 sowie einen Planetenträger 4. Am Planetenträger 4 sind Lagerbolzen 5 befestigt, welche mit Lagerungen 6 in Form von Nadelkränzen zur Lagerung von Planetenrädern 7 versehen sind.

Die Getriebehauptwelle 1 ist mit einer zentralen Schmiermittelzuführungsleitung 8 versehen, die von einer nicht dargestellten Schmiermittelpumpe mit unter Druck stehendem Schmiermittel in Form von Schmieröl versorgt wird. Von der Schmiermittelzuführungsleitung 8 gehen radial verlaufende Schmierbohrungen 9 und 10 zu den beweglichen Teilen des Planetengetriebes. Eine der Schmierbohrungen 9 schafft eine Verbindung zwischen der Schmiermittelzuführungsleitung 8 und einem Spalt 11 zwischen der Abstützung des äußeren Sonnenrades 2 und dem Planetenträger 4. In diesem Spalt 11 ist ein Axiallager 12 zur Abstützung des Sonnenrades 2 gegenüber dem Planetenträger 4 angeordnet.

An der äußeren Peripherie des Axiallagers 12 ist am Planetenträger 4 eine in Richtung zur Getriebehauptwelle 1 offene Ringnut 13 angeordnet. Am Grund dieser Ringnut 13 befinden sich radial verlaufende Durchgangsbohrungen 14, an denen öldicht Rohrleitungen 15 angesetzt sind. Jede dieser Rohrleitungen 15 führt zu einer Höhlung 16, die sich im Zentrum jedes Lagerbolzens 5 für die Planetenräder 7 befinden. Diese Höhlungen 16 sind jeweils von einer beidseitig durch Stopfen 17, 18 verschlossenen Durchgangsbohrung durch den Lagerbolzen 5 gebildet. Durch einen der Stopfen, nämlich 17, ist die zu der betreffenden Höhlung 16 verlaufende Rohrleitung 15 geführt. Von jeder der Höhlungen 16 gehen radiale Bohrungen 19 zu den Lagerungen 6. Die Rohrleitungen 15 sind am Grund der Ringnut 13 von einem Ringelement 20 geführt.

Beim Betrieb des Planetengetriebes wird durch die Schmiermittelpumpe in der Schmiermittelzuführungsleitung 8 der Getriebehauptwelle 1 ein Öldruck aufgebaut, der sich durch die Schmierbohrung 9 in den Spalt 11 fortsetzt und einen Strom von Schmiermittel zu diesem Spalt 11 auslöst. Dabei wird das Axiallager 12 in ausreichendem Maße geschmiert und gekühlt. Gleichzeitig liegt aber auch Öldruck in der Ringnut 13 an, welcher zu einem intensiven Schmiermittelstrom durch die Rohrleitungen 15 in die Höhlungen 16 und durch die Bohrungen 19 zu den Lagerungen 6 der Planetenräder 7 führt. Dieser Schmiermittelstrom wird bei Drehbewegungen des Planetenträgers 4 durch die dabei entstehende Fliehkraft noch unterstützt.

Damit ist gewährleistet, dass an den Lagerungen 6 der Plantetenräder 7 bei jedem Betriebszustand des Planetengetriebes eine ausreichende Menge von Schmiermittel vorhanden ist. Dies ist besonders bei Einsatz eines Planetengetriebes in einem Leistungsverzweigungsgetriebe von Bedeutung, wie in der Anleitung der Beschreibung dargelegt.

### Bezugszeichenliste

- Getriebehauptwelle: 1
- Sonnenrad: 2
- Zentralrad: 3
- Planetenträger: 4
- Lagerbolzen: 5
- Lagerung: 6
- Planetenrad: 7
- Schmiermittelzuführungsleitung: 8
- Schmierbohrung: 9, 10
- Spalt: 11
- Axiallager: 12
- Ringnut: 13
- Durchgangsbohrung: 14
- Rohrleitung: 15
- Höhlung: 16
- Stopfen: 17, 18
- Bohrung: 19
- Ringelement: 20

## Patentansprüche

1. Schmiermittelzuführung für ein Planetengetriebe mit einer zentralen Getriebehauptwelle (1), einem inneren Zentralrad (3), einem äußeren Sonnenrad (2) und mindestens einem Planetenrad (7) mit einer Lagerung (6), die das Planetenrad (7), auf einem mit einem Planetenträger (4) verbundenen Lagerbolzen (5) lagert, einer in der Getriebehauptwelle (1) verlaufenden Schmiermittelzuführungsleitung (8) mit radial zu den Rädern des Planetengetriebes gerichteten Schmierbohrungen (9, 10) und Mitteln zum Führen des Schmiermittels zu den Lagerstellen der beweglichen Teile des Planetengetriebes, insbesondere zu den Lagerungen (6) der Planetenräder (7), wobei die Mittel von Rohrleitungen (15) gebildet sind, die von einer durch zumindest eine der radialen Schmierbohrungen (9) gespeiste Ringnut (13) am Planetenträger (4) ausgehen und zu Höhlungen (16) in den Lagerbolzen (5) führen, und wobei von den Höhlungen (16) radiale Bohrungen (19) zu der Lagerung (6) ausgehen, die am äußeren Umfang des Lagerbolzens (5) eingebracht sind, **dadurch gekennzeichnet, dass** jede der Höhlungen (16) der Lagerbolzen (5) von einer jeweils in jeden der Lagerbolzen (5) eingebrachten axialen Durchgangsbohrung gebildet ist, die an ihren offenen Enden durch Stopfen (17, 18) verschlossen ist und dass die zu der Höhlung (16) führende Rohrleitung (15) mit einem der Stopfen (17) der Höhlung (16) verbunden ist.

2. Schmiermittelzuführung nach Anspruch 1, **dadurch gekennzeichnet, dass** die am Planetenträger (4) befindliche Ringnut (13) als ringförmiges separates Bauteil ausgebildet ist, in dem die Rohrleitungen (15) durch ein Ringelement (20) an einem ihrer Enden gehalten sind und die anderen Enden der Rohrleitungen (15) zu den Höhlungen (16) der Lagerbolzen (5) führen.

3. Schmiermittelzuführung nach Anspruch 2, **dadurch gekennzeichnet, dass** das die Ringnut (13) bildende ringförmige Bauteil mit dem Ringelement (20), die daran anschließenden Rohrleitungen (15) sowie die an den Rohrleitungen (15) anliegenden Stopfen (17) ein gemeinsames integrales Bauteil bilden.

4. Schmiermittelzuführung nach Anspruch 3, **dadurch gekennzeichnet, dass** das integrale Bauteil ein Kunststoff-Formteil ist.

5. Schmiermittelzuführung nach einem oder mehreren der Ansprüche 1 bis 4, **dadurch gekennzeichnet, dass** die in der Getriebehauptwelle (1) verlaufende Schmiermittelzuführungsleitung (8) von einer externen Schmiermittelpumpe mit unter Druck stehendem Schmiermittel versorgt wird.

## Claims

1. Supplying lubricant for a planetary transmission equipped with a central transmission main shaft (1), with an internal central wheel (3), with an external sun gear (2) and at least one planetary wheel (7) with a bearing (6) supporting the planetary wheel (7) mounted on a bearing bolt (5) connected with a planetary bearing (4), with a supplying lubricant pipe (8) running in the transmission main shaft (1), equipped with radial lubrication bores (9, 10) oriented to the wheels of the planetary transmission and with means for guiding the lubricant to the bearing points of the flexible parts of the planetary transmission, primarily to the bearings (6) of the planetary wheels (7), wherein the means are made of pipes (15), starting from a ring groove (13) supplied at least by one of the radial lubrication bores (9), and mounted on the planetary bearing (4) and leading to cavities (16) in the bearing bolt (5), and wherein from the cavities (16) there are radial bores (19) leading to the bearing (6) and inserted in the external circumference of the bearing bolt (5), **characterized in that** all the cavities (16) of the bearing bolt (5) is made of the respective axial through bore-hole inserted in all the bearing bolts (5), wherein the through bore-hole is closed on its open endings by stoppers (17, 18) and that the pipe (15) leading to the cavity (16) is connected with one of the stoppers (17) of the cavity (16).

2. Supplying lubricant according to claim 1, **characterized in that** the ring groove (13) mounted on the planetary bearing (4) is designed as ring-shaped separate component, in which the pipes (15) are supported by a ring element (20) on one of their endings and the other endings of the pipes (15) lead to the cavities (16) of the bearing bolts (5).

3. Supplying lubricant according to claim 2, **characterized in that** the ring-shaped component equipped with the ring element (20) making up the ring groove (13), the pipes (15) connected with it and the stoppers (17) adjacent to the pipes (15) form a common integral component.

4. Supplying lubricant according to claim 3, **characterized in that** the integral component is a formed part made of synthetic material.

5. Supplying lubricant according to one or more than one of the claims 1 to 4, **characterized in that** the supplying lubricant pipe (8) running in the transmission main shaft (1) is supplied by an external lubricant pump with a pressurized lubricant.

## Revendications

1. Approvisionnement en lubrifiant pour une boîte de vitesses planétaire avec un arbre principal de la boîte des vitesses (1), une roue centrale interne (3), une roue solaire externe (2) et au moins une roue planétaire (7) avec un palier (6) qui place la roue planétaire (7) sur un boulon du palier (5) relié à une poutrelle planétaire (4), une conduite d'approvisionnement en lubrifiant (8) passant dans l'arbre principal de la boîte de vitesses (1) radiale aux forages de lubrification (9,10) perforés sur les roues de la boîte de vitesses planétaire et les moyens permettant à conduire les lubrifiants au niveau des pièces mobiles de la boîte de vitesses planétaire, particulièrement vers les paliers (6) des roues planétaires, d'où les moyens sont formés des canalisations (15), qui d'une rainure annulaire (13) alimenté au moins à travers un forage de lubrification (9) conduisent dans les boulons du palier (5) à travers la poutrelle planétaire (4) et les cavités (16), et d'où des cavités (16) sortent des forages radiaux (19) au palier (6), qui se rapporte sur la circonférence extérieure du boulon du palier (5), **caractérise en ce que**, chacune des cavités (16) des boulons du palier (5) est formée chaque fois par un forage axial de passage dans chacun des boulons du palier (5), qui au niveau de son extrémité ouverte est fermée à l'aide des bouchons (17,18) et que la canalisation (15) qui mène aux cavités (16) soit liée à un des bouchons (17) de la cavité (16) .

2. Approvisionnement en lubrifiant selon la revendication 1, **caractérise en ce que**, la rainure annulaire située sur la poutrelle planétaire (4) soit formée en élément annulaire séparé, dans laquelle des canalisations (15) existent à travers un élément en forme d'anneau (20) sur l'une de ses extrémités et les autres extrémités des canalisations (15) conduisent aux cavités (16) des boulons du palier (5).

3. Approvisionnement en lubrifiant selon la revendication 2, **caractérise en ce que**, la pièce en forme de d'anneau formant la rainure annulaire (13) forme un élément intégrant ensemble avec l'élément en forme d'anneau (20), les canalisations raccordées (15) ainsi que les bouchons (17) placées sur les canalisations (15).

4. Approvisionnement selon la revendication 3, **caractérise en ce que**, l'élément intégrant soit formé d'un élément en matière plastique.

5. Approvisionnement en lubrifiant selon une ou plusieurs des revendications 1 à 4, **caractérise en ce que**, la conduite d'approvisionnement en lubrifiant (8) parcourant l'arbre principal de la boîte de vitesses (1) soit fournie en lubrifiant sous pression par une pompe à lubrifiant extérieure.
